# EUROPÄISCHE PATENTSCHRIFT

(11) **EP 1 674 306 B1**
(45) Veröffentlichungstag und Bekanntmachung des Hinweises auf die Patenterteilung: **21.11.2012**
(21) Anmeldenummer: 05021488.1
(22) Anmeldetag: 30.09.2005
(51) Int. Cl.: B60G 17/015

(54) **Landwirtschaftliche Arbeitsmaschine**
Agricultural working machine
Machine de travail agricole

(30) Priorität: 22.12.2004 DE 102004063103
(43) Veröffentlichungstag der Anmeldung: 28.06.2006
(73) Patentinhaber: CLAAS Selbstfahrende Erntemaschinen GmbH, 33428 Harsewinkel (DE)
(72) Erfinder: Holtmann, Bernd, 48324 Sendenhorst (DE); Terörde, Stefan, 48231 Warendorf (DE); Claussen, Frank, 33428 Greffen (DE)

(56) Entgegenhaltungen:
- EP-A- 0 378 202
- EP-A- 0 620 144
- EP-A- 1 063 107
- EP-A1- 1 394 021
- WO-A-98/30404
- DD-A7- 286 713
- FR-A- 2 590 525
- JP-A- 2 262 412
- JP-A- 8 300 929
- US-A- 4 141 430

## Beschreibung

Die Erfindungen betrifft eine Stützradanordnung für einen Mähdrescher gemäß dem Oberbegriff des Anspruchs 1, wie offenbart in EP-A-1394 021. DD-A-286713 offenbart eine Stützradanordnuntg an landwirtschaftlichen Maschinen mit einer Schupfregelung.

Aus der EP A 1063 107 ist eine Traktionshilfe an Antriebsachsen mit einer luftgefederten Vor- oder Nachlaufachse bekannt, die bei auftretendem Schlupf den Luftdruck In Federbälgen der luftgefederten Vor- oder Nachlaufachse verändert.

Die WO 98/30404 beschreibt eine Tandem-Hinterradechsenanordnung für ein Fahrzeug, die mit einem System zur Sensierung und Steuerung des Schlupf sowie zur Gewichtsverlagerung an den Antriebsachsen versehen ist.

Die FR 25 90 525 beschreibt ebenfalls eine Tandemachse eines Fahrzeuges, die pneumatisch oder hydraulisch gefedert sind, Bei Auftretendem Schlupf wird die Belastung der Achsen verändert.

Aus der US 4,141,430 ist ein geschwindigkeitsgesteuertes Steuerungssystem für Fahrzeugachsen bekannt, welches bei auftretendem Schlupf an einer der angetriebenen Achsen eine Umverteilung der Achsbelastung durchführt.

In der DE 25 28 035 ist ein Dreiachsschlepper für landwirtschaftliche Zwecke offenbart, bei dem alle Räder vom Schleppermotor angetrieben werden. Die Mittenräder sind jeweils über einen Radmotor an einem Tragrohr angeordnet, das um eine Achse quer zum Schlappergestell schwenkbar ist. Zwischen dem Schleppergestell und jedem Tragrohr ist ein Hubzylinder angelenkt, über den das Mittenrad in seiner Lage gegenüber dem Maschinengesteil einstellbar ist. Die Kraft, mit der die Mittenräder auf den Boden gedrückt werden, gibt der Fahrer vor, um den Eingriff der Mittenräder in den Boden zu erhöhen und damit die Vorschubkraft auf eine möglichst große Fläche zu übertragen.

Nachteilig bei dieser bekannten Erntemaschine ist, dass der Bediener entscheidet, ob und wie stark die Mittenräder gegen den Boden gedrückt werden. Dabei können die übrigen Räder am Schlepper gleichzeitig so stark entlastet werden, dass diese das Antriebsmoment nicht mehr auf den Boden übertragen und durchdrehen.

Der Erfindung liegt daher die Aufgabe zugrunde, ein Fahrzeug zu schaffen, das die Nachteile des Standes der Technik vermeidet und das die auf die Räder wirkenden Momente zur Bewegung des Fahrzeugs optimal auf den Boden überträgt.

Diese Aufgabe wird erfindungsgemäß durch die kennzeichnenden Merkmale des Anspruchs 1 gelöst. Weitere vorteilhafte Wirkungen des Erfindungsgegenstandes ergeben sich aus den Unteransprüchen.

Indem die Verteilung, der auf die Fahrzeugachsen und die Stützradanordnung wirkenden Stützlasten schlupfabhängig geregelt wird, können die auf die Räder wirkenden Momente zur Bewegung des Fahrzeugs optimal auf den Boden übertragen werden.

Dadurch, dass die Stützradanordnung im Bereich zwischen den Fahrzeugachsen angeordnet ist, ist die Gesamtlänge des Fahrzeugs im Vergleich zu einem vergleichbaren Fahrzeug ohne Stützradanordnung gleich groß.

Die Fahrzeugachsen weisen vorteilhafterweise Räder auf, wobei zumindest die Räder einer Fahrzeugachse angetrieben werden, so dass das Fahrzeug selbstfahrend ist.

Eine besonders einfache Ausführung ergibt sich, wenn die Stützradanordnung im wesentlichen aus wenigstens einem Stützrad besteht, das von einem Stützrahmen aufgenommen wird.

Wenn der Stützrahmen aus wenigstens einem Tragarm und wenigstens einem Hubzylinder gebildet wird, wobei der Tragarm gelenkig mit der Vorderachse und der doppelt wirkende Hubzylinder gelenkig an dem Fahrzeugrahmen und gelenkig mit dem Tragarm verbunden ist, kann das Stützrad eine Schwenkbewegung in vertikaler Richtung ausführen.

Vorteilhafterweise sind einem oder mehreren Rädern der Fahrzeugachsen und/oder der Stützradanordnungen Drehzahlsensoren zugeordnet, die abhängig von den Radumdrehungen Raddrehzahlsignale generieren, so dass die Bewegung eines und/oder mehrerer Räder relativ zum Boden überwacht wird.

Eine einfache und daher kostengünstige Ausführung der Erfindung ergibt sich dann, wenn aus den Drehzahlsignalen des Rades die Radgeschwindigkeit des Rades ermittelt werden.

Dem Fahrzeug ist vorteilhafterweise eine Sensiereinrichtung zur Ermittlung der Fahrgeschwindigkeit des Fahrzeugs zugeordnet, so dass die Bewegung des Fahrzeugs relativ zum Untergrund gemessen werden kann.

Damit der Vergleich der Geschwindigkeiten selbsttätig erfolgt, sind die Drehzahlsensoren und die Sensiereinrichtung mit einer Verrechnungseinheit verbunden.

Eine sehr präzise arbeitende Ausführung der Erfindung ergibt sich, wenn die Verrechnungseinheit mit der Fahrgeschwindigkeit des Fahrzeugs und der Radgeschwindigkeit des Rades den Schlupf des Rades gegenüber dem Boden berechnet. In vorteilhafter Weiterbildung der Erfindung kann eine konstruktiv einfach umsetzbare und damit kostengünstige Ausgestaltung der Erfindung dann erreicht werden, wenn die Verrechnungseinheit den Schlupf des jeweiligen Rades aus dem Verhältnis der Radgeschwindigkeiten der Räder verschiedener Fahrzeugachsen zueinander berechnet.

Gemäß der Erfindung sind in der Verrechnungseinheit Kennlinien gespeichert, die wenigstens einen zulässigen Schlupf und wenigstens einen zulässigen Bremsschlupf vorgeben, wobei der zulässige Schlupf und der zulässige Bremsschlupf abhängig von der Fahrgeschwindigkeit des Mähdreschers sind.

Um die auf die Räder wirkenden Momente besser auf den Boden übertragen zu können, wird der Anpressdruck der Stützräder auf den Boden verringert wird, wenn der Schlupf zumindest eines Rades der Fahrzeugachsen größer als der zulässige Schlupf ist und wenn der Schlupf zumindest eines Rades der Fahrzeugachsen kleiner als der zulässige Bremsschlupf ist.

Dadurch, dass die Stützradanordnung entlastet und gleichzeitig die Vorderachse und die Hinterachse stärker belastet werden, wenn der Anpressdruck der Stützräder auf den Boden erhöht wird und umgekehrt die Stützradanordnung stärker belastet und gleichzeitig die Vorderachse und die Hinterachse entlastet werden, wenn der Anpressdruck der Stützräder auf den Boden verringert wird, kann die Verteilung der Stützlasten auf einfache angepasst werden.

Es zeigen:
- Fig.1: ein erfindungsgemäßes Fahrzeug in der Seitenansicht,
- Fig.2: ein Ablaufdiagramm zur Regelung des Drucks im Hubzylinder einer Stützradanordnung.

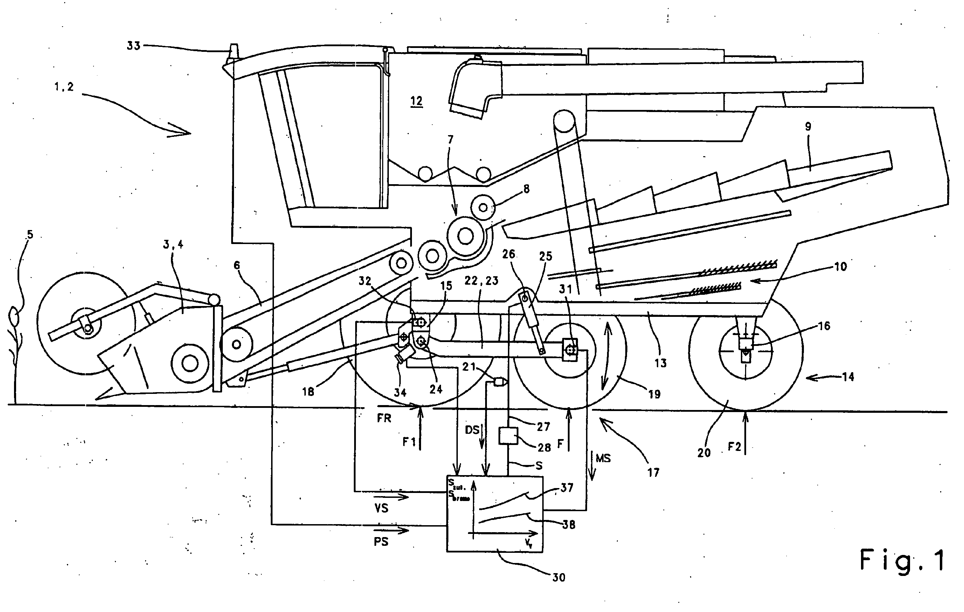

Fig.1 zeigt ein als selbstfahrender Mähdrescher 1 ausgeführtes Fahrzeug 2. Der Mähdrescher 1 nimmt frontseitig ein als Schneidwerk 3 ausgeführtes Vorsatzgerät 4 auf, welches das auf dem Feld gewachsene Erntegut 5 mäht und anschließend an einen Schrägförderer 6 übergibt. Der Schrägförderer 6 führt das Erntegut an sich bekannten und daher hier nur schematisch dargestellten Arbeitsorganen 7 des Mähdreschers 1 zu, wobei diese Arbeitsorgane 7-10 beispielsweise das Dreschwerk 7, Gutleitelemente 8, Korn-Stroh-Trennelemente 9 und eine Erntegutreinigungseinrichtung 10 sein können, die das Erntegut 5 auf an sich bekannte Weise aufbereiten. Über nicht dargestellte Fördereinrichtungen gelangen die von dem Entegut 5 abgeschiedenen Körner zur Zwischenspeicherung in einen Korntank 12. Sowohl die Arbeitsorgane 7-10 als auch der Korntank 12 werden von einem Fahrzeugrahmen 13 aufgenommen, der seinerseits von einem Fahrwerk 14 getragen wird. Das Fahrwerk 14 wird von einer Vorderachse 15 und einer Hinterachse 16 sowie einer im Bereich zwischen den Fahrzeugachsen 15, 16 angeordneten Stützradanordnung 17 gebildet, die jeweils über Räder 18, 19, 20 auf dem Boden abgestützt werden. In dem dargestellten Ausführungsbeispiel werden ausschließlich die Räder 18 der Vorderachse 15 angetrieben, es ist jedoch auch denkbar, dass zusätzlich die Räder 20 der Hinterachse 16 und /oder die Stützräder 19 angetrieben werden.
Die Stützradanordnung 17 besteht im wesentlichen aus einem Stützrahmen 22, an dem die Stützräder 19 drehbar gelagert sind. Der Stützrahmen 22 gliedert sich in einen Tragarm 23, der um eine Drehachse 24 schwenkbar mit der Vorderachse 15 verbunden ist und einen Hubzylinder 25, der einends um eine Drehachse 26 schwenkbar an dem Fahrzeugrahmen 13 angelenkt und kolbenstangenseitig gelenkig mit dem Tragarm 23 verbunden ist. Es liegt im Rahmen der Erfindung, dass dem Fahrzeug 1 auch mehrere Stützradanordnungen 17 zugeordnet sein können. Der Hubzylinder 25 wird kolbenseitig druckbeaufschlagt, so dass die Stützräder 19 mit einem Anpressdruck gegen den Boden gedrückt werden.
Um die auf die Fahrzeugachsen 15, 16 und die Stützradanordnung 17 wirkenden Stützlasten F, F1, F2 einstellen zu können, ist der Druck in dem den Hubzylinder 25 aufnehmenden Hydraulikkreislauf 27 über ein Schaltventil 28 veränderbar. Das Schaltventil 28 ist hierzu mit einer Verrechnungseinheit 30 verbunden, die den Druck im Hubzylinder 25 auf an späterer Stelle noch näher erläuterte Weise schlupfabhängig regelt, damit die angetriebenen und /oder gebremsten Räder 18 die Momente optimal auf den Boden übertragen.
Dem Mähdrescher 1 ist zu diesem Zweck an einem Rad 18 der Vorderachse 15 ein Drehzahlsensor 32 zur Ermittlung der Anzahl der Radumdrehungen eines angetriebenen Rades 18 zugeordnet. Der Drehzahlsensor 32 generiert in Abhängigkeit von der Anzahl der Umdrehungen der Räder 18 Drehzahlsignale VS, die an die elektronische Verrechnungseinheit 30 übermittelt werden. Es liegt im Rahmen der Erfindung, dass auch an mehreren Rädern 18, 19, 20 des Mähdreschers 1 Drehzahlsensoren 31, 32 angeordnet sein können, wobei die von diesen Drehzahlsensoren 31, 32 generierten Drehzahlsignale VS, MS ebenfalls an die Verrechnungseinheit 30 übermittelt werden können. Aus den Drehzahlsignalen 31, 32 können beispielsweise mit den Durchmessern der zugehörigen Räder 18 die Radgeschwindigkeiten eines angetriebenen Rades 18 und eines nicht angetriebenen Rades 19 ermittelt und miteinander verglichen werden. Die Differenz der Radgeschwindigkeiten verhält sich annähernd proportional zum Schlupf des angetriebenen Rades 18.
Zusätzlich ist an dem Mähdrescher 1 eine Sensiereinrichtung 33 zur Ermittlung der Fahrgeschwindigkeit V des Mähdreschers, wie beispielsweise ein Radarsensor 34 oder eine GPS-Vorrichtung 35 angeordnet, die ebenso wie die Drehzahlsensoren 31, 32 mit der elektronischen Verrechnungseinheit 30 verbunden sind.

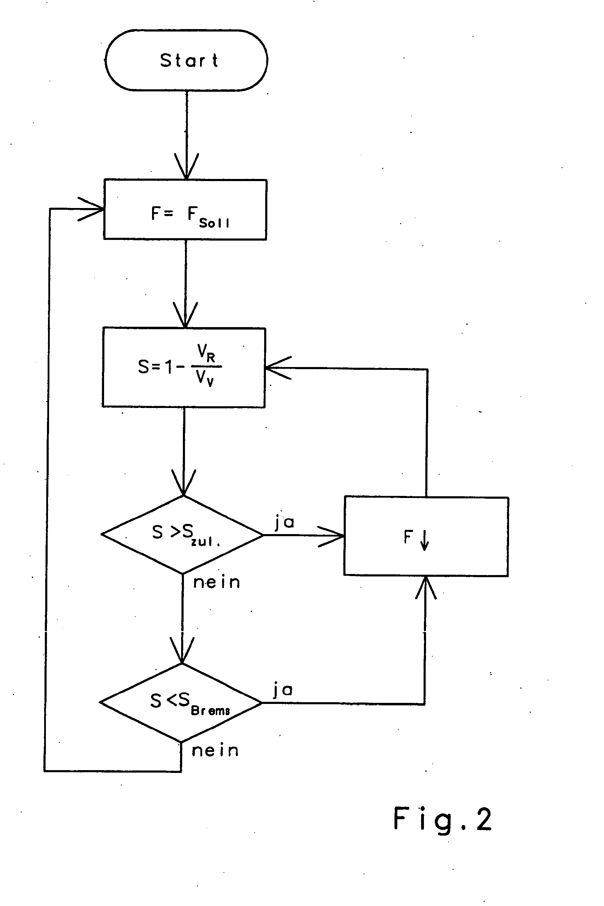

Fig.2 zeigt ein Ablaufdiagramm zur Regelung des Drucks DS im Hubzylinder 25. Die Verrechnungseinheit 30 berechnet mit dem Durchmesser und dem Drehzahlsignal VS des angetriebenen Vorderrades 18 den Schlupf S des Rades 18 beim Abrollen auf dem Boden. In der Verrechnungseinheit 30 ist eine Kennlinie 37 gespeichert, die einen zulässigen Schlupf S_{zul} des Rades 18 abhängig von der Fahrgeschwindigkeit V_{V} des Mähdreschers 1 vorgibt, der einen bestimmten Schlupfanteil beim Beschleunigen und bei der gleichförmigen Bewegung des Mähdreschers 1 am Rad 18 toleriert.
Die Verrechnungseinheit 30 vergleicht den Schlupf S des Rades 18 mit dem zulässigen Schlupf S_{zul}. Ist der Schlupf S des angetriebenen Vorderrades 18 beim Beschleunigen bzw. bei gleichförmiger Bewegung des Mähdreschers 1 größer als der zulässige Schlupf S_{zul}, erzeugt die Verrechnungseinheit 30 ein Signal S, dass über das Schaltventil 28 zur Druckreduzierung auf die Kolbenfläche des Hubzylinders 25 führt, wodurch der Anpressdruck der Stützräder 19 auf den Boden verringert wird. Dies bewirkt, dass die Stützlast F auf die Stützräder 19 verringert und die Stützlast F1 auf die Vorderräder 18 sowie die Stützlast F2 auf die Hinterräder 20 erhöht werden, so dass bei gleichbleibendem Reibwert zwischen den angetriebenen Vorderrädern 18 und Boden die Reibkraft F_{R} erhöht wird, um die Übertragung des Antriebsmoments von den Rädern 18 auf den Boden zu verbessern. Auch beim Bremsen wird ein gewisser Schlupfanteil toleriert, weshalb eine weitere in der Verrechnungseinheit 32 gespeicherte Kennlinie 38 abhängig von der Fahrgeschwindigkeit Vv des Mähdreschers 1 einen zulässigen Bremsschlupf S_{brems} vorgibt. Die Verrechnungseinheit 23 vergleicht den Schlupf S mit dem zulässigen Bremsschlupf S_{brems}. Ist der Schlupf S des Vorderrades 18 kleiner als die zulässige Bremsschlupf S_{brems}, so erzeugt die Verrechnungseinheit 30 in diesem Fall ebenfalls ein Signal S dass über das Schaltventil 28 zu Druckreduzierung auf den Kolben des Hubzylinders 25 führt. Dadurch wird wiederum die Stützlast F auf das Stützrad 19 verringert und die Stützlast F1 auf die gebremsten Vorderräder 18 sowie die Stützlast F2 auf die Hinterräder 20 erhöht, so dass bei gleichbleibendem Reibwert zwischen dem gebremsten Vorderrad 18 und Boden die Reibkraft FR erhöht wird, so dass die Übertragung des Bremsmoments von dem Rad 18 auf den Boden und damit die Bremswirkung verbessert wird.
Eine Druckerhöhung auf die Kolbenfläche des Hubzylinder 25 bewirkt umgekehrt, dass sich die Stützlast F auf das Stützrad 19 erhöht und die Stützlast F1 auf die gebremsten Vorderräder 18 sowie die Stützlast F2 auf die Hinterräder 20 verringert.

Bezugszeichenliste:
- 1: Mähdrescher
- 2: Fahrzeug
- 3: Schneidwerk
- 4: Vorsatzgerät
- 5: Erntegut
- 6: Schrägförderer
- 7: Dreschwerk
- 8: Gutleitelement
- 9: Korn-Stroh-Trennelement
- 10: Erntegutreinigungseinrichtung
- 12: Korntank
- 13: Fahrzeugrahmen
- 14: Fahrwerk
- 15: Vorderachse
- 16: Hinterachse
- 17: Stützradanordnung
- 18: Räder
- 19: Stützräder
- 20: Räder
- 21: Drucksensor
- 22: Stützrahmen
- 23: Tragarm
- 24: Drehachse
- 25: Hubzylinder
- 26: Drehachse
- 27: Hydraulikkreislauf
- 28: Schaltventil
- 30: Verrechnungseinheit
- 31: Drehzahlsensor
- 32: Drehzahlsensor
- 33: Sensiereinrichtung
- 34: Radarsensor
- 35: GPS-Vorrichtung
- 37: Kennlinie
- 38: Kennlinie
- F: Stützlast
- F 1: Stützlast
- F2: Stützlast
- FR: Reibkraft
- VS: Drehzahlsignal
- MS: Drehzahlsignal
- DS: Drucksignal
- V_{V}: Fahrgeschwindigkeit
- S: Schlupf
- S_{zul}: zulässiger Schlupf
- S_{brems}: zulässiger Bremsschlupf

## Patentansprüche

1. Mähdrescher (1) mit zumindest einem Fahrzeugrahmen (13), das über ein wenigstens eine Vorderachse (15), wenigstens eine Hinterachse (16) und wenigstens eine Stützradanordnung (17) aufweisendes Fahrwerk (14) auf dem Boden abgestützt wird, dass der Stützrahmen (22) aus wenigstens einem Tragarm (23) und wenigstens einem doppelt wirkenden Hubzylinder (25) gebildet wird, wobei der Tragarm (23) gelenkig mit der Vorderachse (15) verbunden ist und der Hubzylinder (25) gelenkig an dem Fahrzeugrahmen (13) und gelenkig mit dem Tragarm (23) verbunden ist,
**dadurch gekennzeichnet,**
**dass** die Verteilung der auf die Fahrzeugachsen (15, 18) und die Stützradanordnung (17) wirkenden Stützlasten (F, F1, F2) schlupfabhängig geregelt wird, dass einem oder mehreren Rädern (18, 19,20) der Fahrzeugachsen (15, 16) und/oder der Stützradanordnungen (17) Drehzahlsensoren (31, 32) zugeordnet sind, die abhängig von der Anzahl der Radumdrehungen Drehzahlsignale (VS, MS) generieren, dass dem Mähdrescher (1) eine Sensiereinrichtung (33) zur Ermittlung der Fahrgeschwindigkeit (Vᵥ) des Mähdreschers (1) zugeordnet ist, und dass die Drehzahlsensoren (32) und die Sensiereinrichtung (33) mit einer Verrechnungseinheit (30) verbunden sind, in der Kennlinien (37, 38) gespeichert sind, die wenigstens einen zulässigen Schlupf (S_{zul}) und wenigstens einen zulässigen Bremsschlupf (S_{brems}) vorgeben, wobei der zulässige Schlupf (S_{zul}) und der zulässige Bremsschlupf (S_{brems}) abhängig von der Fahrgeschwindigkeit (Vᵥ) des Mähdreschers (1) sind.

2. Mähdrescher (1) nach Anspruch 1,
**dadurch gekennzeichnet,**
**dass** die Stützradanordnung (17) im Bereich zwischen den Fahrzeugachsen (15, 16) angeordnet ist.

3. Mähdrescher (1) nach wenigstens einem der vorhergehenden Ansprüche, **dadurch gekennzeichnet,**
**dass** die Fahrzeugachsen (15, 16) Räder (18, 20) aufweisen, wobei zumindest die Räder (18, 20) einer Fahrzeugachsen (15, 16) angetrieben werden.

4. Mähdrescher (1) nach wenigstens einem der vorhergehenden Ansprüche, **dadurch gekennzeichnet,**
**dass** die Stützradanordnung (17) im wesentlichen aus wenigstens einem Stützrad (19) besteht, das von einem Stützrahmen (22) aufgenommen wird.

5. Mähdrescher (1) nach wenigstens einem der vorhergehenden Ansprüche, **dadurch gekennzeichnet,**
**dass** aus den Drehzahlsignalen (VS) des Rades (18, 19, 20) die Radgeschwindigkeit (V_{R}) des Rades (18, 19, 20) ermittelt wird.

6. Mähdrescher (1) nach wenigstens einem der vorhergehenden Ansprüche, **dadurch gekennzeichnet,**
**dass** die Verrechnungseinheit (30) mit der Fahrgeschwindigkeit (Vᵥ) des Mähdrescher (1) und der Radgeschwindigkeit (V_{R}) des Rades (18, 19, 20) den Schlupf (S) des Rades (18, 19, 20) berechnet.

7. Mähdrescher (1) nach wenigstens einem der vorhergehenden Ansprüche, **dadurch gekennzeichnet,**
**dass** die Verrechnungseinheit (30) den Schlupf (S) des jeweiligen Rades (18, 19, 20) aus dem Verhältnis der Radgeschwindigkeiten (V_{R}) der Räder (18, 19, 20) verschiedener Fahrzeugachsen (15-17) zueinander berechnet.

8. Mähdrescher (1) nach wenigstens einem der vorhergehenden Ansprüche, **dadurch gekennzeichnet,**
**dass** der Anpressdruck der Stützräder (19) auf den Boden verringert wird, wenn der Schlupf (S) zumindest eines Rades (18, 20) der Fahrzeugachsen (15, 16) größer als der zulässige Schlupf (S_{zul}) ist.

9. Mähdrescher (1) nach wenigstens einem der vorhergehenden Ansprüche, **dadurch gekennzeichnet,**
**dass** der Anpressdruck der Stützräder (19) auf den Boden verringert wird, wenn der Schlupf (S) zumindest eines Rades (18, 20) der Fahrzeugachsen (15, 16) kleiner als der zulässige Bremsschlupf (S_{brems}) ist.

10. Mähdrescher (1) nach wenigstens einem der vorhergehenden Ansprüche, **dadurch gekennzeichnet,**
**dass** die Stützradanordnung (17) entlastet und gleichzeitig die Vorderachse (15) und die Hinterachse (16) stärker belastet werden, wenn der Anpressdruck der Stützräder (20) auf den Boden erhöht wird und umgekehrt die Stützradanordnung (17) stärker belastet und gleichzeitig die Vorderachse (15) und die Hinterachse (16) entlastet werden, wenn der Anpressdruck der Stützräder (20) auf den Boden verringert wird.

## Claims

1. A combine harvester (1) comprising at least one vehicle frame (13) supported on the ground by way of a chassis (14) having at least one front axle (15), at least one rear axle (16) and at least one support wheel arrangement (17), wherein the support frame (22) is formed from at least one carrier arm (23) and at least one double-acting linear cylinder (25), wherein the carrier arm (23) is hingedly connected to the front axle (15) and the linear cylinder (25) is hingedly connected on the vehicle frame (13) and hingedly to the carrier arm (23),
**characterised in that**
distribution of the support loads (F, F1, F2) acting on the vehicle axles (15, 16) and the support wheel arrangement (17) is regulated in slip-dependent relationship, associated with one or more wheels (18, 19, 20) of the vehicle axles (15, 16) and/or the support wheel arrangements (17) are rotary speed sensors (31, 32) which generate rotary speed signals (VS, MS) in dependence on the number of wheel revolutions, that a sensing device (33 for ascertaining the speed of travel (Vᵥ) of the combine harvester (1) is associated with the combine harvester (1), and that the rotary speed sensors (32) and the sensing device (33) are connected to a computing unit (30) in which are stored characteristic curves (37, 38) which preset at least one admissible slip (S_{zul}) and at least one admissible brake slip (S_{brems}), wherein the admissible slip (S_{zul}) and the admissible brake slip (S_{brems}) are dependent on the speed of travel (Vᵥ) of the combine harvester (1).

2. A combine harvester (1) according to claim 1 **characterised in that** the support wheel arrangement (17) is arranged in the region between the vehicle axles (15, 16).

3. A combine harvester (1) according to at least one of the preceding claims **characterised in that** the vehicle axles (15, 16) have wheels (18, 20), wherein at least the wheels (18, 20) of one vehicle axle (15, 16) are driven.

4. A combine harvester (1) according to at least one of the preceding claims **characterised in that** the support wheel arrangement (17) comprises substantially at least one support wheel (19) carried by a support frame (22).

5. A combine harvester (1) according to at least one of the preceding claims **characterised in that** the wheel speed (V_{R}) of the wheel (18, 19, 20) is determined from the rotary speed signals (VS) of the wheel (18, 19, 20).

6. A combine harvester (1) according to at least one of the preceding claims **characterised in that** the computing unit (30) computes the slip (S) of the wheel (18, 19, 20) with the speed of travel (Vᵥ) of the combine harvester (1) and the wheel speed (V_{R}) of the wheel (18, 19, 20).

7. A combine harvester (1) according to at least one of the preceding claims **characterised in that** the computing unit (30) computes the slip (S) of the respective wheel (18, 19, 20) from the ratio of the wheel speeds (V_{R}) of the wheels (18, 19, 20) of different vehicle axles (15-17) relative to each other.

8. A combine harvester (1) according to at least one of the preceding claims **characterised in that** the contact pressure of the support wheels (19) on the ground is reduced if the slip (S) of at least one wheel (18, 20) of the vehicle axles (15, 16) is greater than the admissible slip (S_{zul}).

9. A combine harvester (1) according to at least one of the preceding claims **characterised in that** the contact pressure of the support wheels (19) on the ground is reduced if the slip (S) of at least one wheel (18, 20) of the vehicle axles (15, 16) is smaller than the admissible brake slip (S_{brems}).

10. A combine harvester (1) according to at least one of the preceding claims **characterised in that** the support wheel arrangement (17) is relieved of load and at the same time the front axle (15) and the rear axle (16) are more heavily loaded if the contact pressure of the support wheels (20) on the ground is increased and conversely the support wheel arrangement (17) is more heavily loaded and at the same time the front axle (15) and the rear axle (16) are relieved of load if the contact pressure of the support wheels (20) on the ground is reduced.

## Revendications

1. Moissonneuse-batteuse (1) comportant au moins un cadre de véhicule (13) qui est supporté au sol par un organe de roulement (14) présentant au moins un essieu avant (15), au moins un essieu arrière (16) et au moins un agencement de roues de support (17), en ce qu'un cadre de support (22) est formé par au moins un bras porteur (23) et au moins un vérin hydraulique à double action (25), le bras porteur (23) étant relié de manière articulée à l'essieu avant (15) et le vérin hydraulique (25) étant relié de manière articulée au niveau du cadre de véhicule (13) et de manière articulée avec le bras porteur (23),
**caractérisée en ce que**
la répartition des charges de support (F, F1, F2) agissant sur les essieux de véhicule (15, 16) et l'agencement de roues de support (17) est réglée en fonction du glissement, **en ce que** des capteurs de régime (31, 32) sont associés à une ou plusieurs roues (18, 19, 20) des essieux de véhicule (15, 16) et/ou des agencements de roues de support (17), lesquels capteurs génèrent en fonction du nombre de rotations de roue des signaux de régime (VS, MS), **en ce qu'**un dispositif de détection (33) pour la détermination de la vitesse de véhicule (Vᵥ) de la moissonneuse-batteuse (1) est associé à la moissonneuse-batteuse (1), et **en ce que** les capteurs de régime (32) et le dispositif de détection (33) sont reliés à une unité de calcul (30), mis en mémoire dans les courbes caractéristiques (37, 38), qui fixent au moins un glissement autorisé (S_{zul}) et au moins un glissement au freinage autorisé (S_{brems}), le glissement autorisé (S_{zul}) et le glissement au freinage autorisé (S_{brems}) dépendant de la vitesse de véhicule (Vᵥ) de la moissonneuse-batteuse (1).

2. Moissonneuse-batteuse (1) selon la revendication 1,
**caractérisée en ce que**
l'agencement de roues de support (17) est disposé dans la zone entre les essieux de véhicule (15, 16).

3. Moissonneuse-batteuse (1) selon au moins l'une des revendications précédentes, **caractérisée en ce que**
les essieux de véhicule (15, 16) présentent des roues (18, 20), où au moins les roues (18, 20) d'un essieu de véhicule (15, 16) sont entraînées.

4. Moissonneuse-batteuse (1) selon au moins l'une des revendications précédentes, **caractérisée en ce que**
l'agencement de roues de support (17) se compose pour l'essentiel d'au moins une roue de support (19) qui est reçue par un cadre de support (22).

5. Moissonneuse-batteuse (1) selon au moins l'une des revendications précédentes, **caractérisée en ce que**
la vitesse de roue (V_{R}) de la roue (18, 19, 20) est déterminée à partir des signaux de régime (VS) de la roue (18, 19, 20).

6. Moissonneuse-batteuse (1) selon au moins l'une des revendications précédentes, **caractérisée en ce que**
l'unité de calcul (30) calcule avec la vitesse de véhicule (Vᵥ) de la moissonneuse-batteuse (1) et la vitesse de roue (V_{R}) de la roue (18, 19, 20) le glissement (S) de la roue (18, 19, 20).

7. Moissonneuse-batteuse (1) selon au moins l'une des revendications précédentes, **caractérisée en ce que**
l'unité de calcul (30) calcule le glissement (S) de la roue correspondante (18, 19, 20) à partir du rapport qu'entretiennent entre elles les vitesses de roue (V_{R}) des roues (18, 19, 20) des différents essieux de véhicule (15-17).

8. Moissonneuse-batteuse (1) selon au moins l'une des revendications précédentes, **caractérisée en ce que**
la pression d'appui des roues de support (19) au sol est amoindrie lorsque le glissement (S) d'au moins une roue (18, 20) des essieux de véhicule (15, 16) est supérieur au glissement autorisé (S_{zul}).

9. Moissonneuse-batteuse (1) selon au moins l'une des revendications précédentes, **caractérisée en ce que**
la pression d'appui des roues de support (19) au sol est amoindrie lorsque le glissement (S) d'au moins une roue (18, 20) des essieux de véhicule (15, 16) est inférieur au glissement autorisé (S_{zul}).

10. Moissonneuse-batteuse (1) selon au moins l'une des revendications précédentes, **caractérisée en ce que**
l'agencement de roues de support (17) décharge et en même temps charge davantage l'essieu avant (15) et l'essieu arrière (16) lorsque la pression d'appui des roues (20) au sol est accrue et à l'inverse l'agencement de roues de support (17) charge davantage et en même temps décharge l'essieu avant (15) et l'essieu arrière (16) lorsque la pression d'appui des roues (20) au sol est amoindrie.
